# EUROPEAN PATENT APPLICATION

(11) **EP 1 772 408 A1**
(43) Date of publication of application: **11.04.2007**
(21) Application number: 06121691.7
(22) Date of filing: 03.10.2006
(51) Int. Cl.: B65H 19/18, A01F 15/07

(54) **Self threading sheet wrapper for round baler**

(30) Priority: 04.10.2005 US 242775; 04.10.2005 US 242774
(71) Applicant: CNH Belgium N.V., 8210 Zedelgem (BE)
(72) Inventor: Smith, Kevin M., Narvon, PA 17555 (US); McClure, John, New Holland, PA 17557 (US); Walker, James D., Lititz, PA 17543 (US)
(74) Representative: CNH IP Department

(57) **Abstract**

A round bale wrapping mechanism having a self-threading mechanism (40,140) for automatically replacing an active roll (52,150) of wrapping material with a storage roll (50,148) prior to the active roll (52,150) reaching the point of exhaustion of wrapping material. A method is also given for self-threading the sheet-like bale wrapping material from the storage roll (50,148) through the bale wrapping mechanism.

## Description

### Background of the invention

The present invention relates generally to round balers with net-wrapping capabilities, and more particularly to a net wrapping mechanism for a round baler that self-threads a new roll of wrapping material as the initial roll is consumed.

In the crop packaging industry, generally a smaller part of the cattle/dairy industry, round balers have become quite prevalent for their capability of producing a conveniently sized cylindrical bale, very often automatically wrapped with a sheeting material such as net or film. Prior art round balers generally have a bale-forming chamber defined by an apron comprising an array of side-by-side belts, transverse slats trained on chains, a plurality of rolls or a combination of these various elements, e.g., rolls and belts. Crop material, such as hay, is picked up from the ground as the baler travels across the field, and is fed into a fixed or expandable chamber where it is rolled up to form a compact cylindrical hay package. While still inside the bale-forming chamber in its compacted form, the outer surface of the package is wrapped with twine or other wrapping material, such as film or net, prior to ejection of the wrapped bale from the chamber onto the ground for subsequent handling. The wrapping mechanisms generally dispense wrapping material from a roll, and have a location for a stored roll, but in order to use the stored roll, the operator must stop the machine and manually load and thread the second roll.

Common practice has the baler wrap the bales with twine, net-like or continuous plastic sheeting. With twine, the bale is wrapped back and forth from side-to-side as the bale is turned, from a single dispensing mechanism, or back and forth from middle-to-side as the bale is turned, from dual dispensing mechanisms with twine numerous time, the twine "gripping" the crop material and prior wrappings of twine adequately to hold the package together in a process often referred to as "tying". Net wrap is generally made of a woven or an extruded polymer with the appearance of a fish net, generally equal in width to the bale being formed, with regular openings there through and is overlapped on itself to hold the package together. An adhesive may be used to improve the holding power of the net wrap. Plastic wrap, or film, is a generally continuous sheet of plastic, also generally the width of the bale being formed, with a somewhat adhesive surface that grips itself when overlapped and the crop material to form the package.

Replacing a sheet roll on current round balers generally requires a substantial amount of work. First, the operator must remove the empty roll and carry a full roll from the storage box to the wrapper assembly in the front of the baler. After installing the full roll into the wrapper assembly, the operator must thread the end of the roll around spreader rolls and through the duckbill, or similar, dispensing assembly. The process takes an experienced operator about five minutes, and would be done once or twice during a normal baling day. While this amount of time is small, any improvements made to this reloading cycle will help reduce operator fatigue and stress, and as such will offer significant marketing advantage over competitive units.

It would be a great advantage to provide a self-threading capability to a round baler wrapping mechanism that overcomes the above-identified problems and disadvantages.

### Summary of the invention

Accordingly, it is an object of the present invention to provide an improved round bale wrapping mechanism that avoids the above-noted disadvantages.

It is another object of the present invention to provide a round bale wrapping mechanism that provides storage for a second roll of wrapping material, in addition to a roll being dispensed.

It is a further object of the present invention to provide a round bale wrapping mechanism that is self-threading, allowing the operator to replace a roll of sheet wrapping material with a minimal amount of work.

It is a further object of the present invention to provide a round net wrapping mechanism that carries two rolls of wrapping material that allows the operator to selectively replace the active roll with one in a storage position.

It is a further object of the present invention to provide a round baler net wrapping mechanism that carries two rolls of wrapping material on a pivoting carrier that pivots down for installation of a new storage roll, allowing the operator to install the roll at a lower more convenient height.

According to the invention, there is provided a round baler having a wrapping mechanism as claimed in claim 1. Such self-threading mechanism will allow the wrapping material of the storage roll to be brought into contact with the dispensing wrapping material of the active roll and pulled through the treading components of the wrapper. In a first embodiment, the storage roll thus becomes the working roll and a new storage roll may be installed in place of the empty storage roll (previously the working roll). In a second embodiment, the storage roll is powered by an driving mechanism for selectively driving the storage roll to feed the wrapping material onto the wrapping material of the active roll.

Also according to the invention, there is provided a method of self-threading a sheet-like bale wrapping material from a roll through a bale wrapping mechanism as claimed in claim 16. This method has the advantage of automatically threading the wrapping material of a storage roll through the wrapping mechanism prior to the exhausting of wrapping material of the active roll.

### Brief description of the drawings

The present invention will now be described in further detail, by way of example, with reference to the following drawings, in which:
Fig. 1 is a diagrammatic overview of a round baler having a self-threading mechanism;
Fig. 2 is a front plan view of a first embodiment of the self-threading mechanism, showing the various components;
Fig. 3 is a left-side elevation view of the first embodiment of the self-treading mechanism, spreader rolls and duckbill;
Fig. 4 is a left-side view, similar to Fig. 3, showing the storage rolling intermediate the storage position and the self-threading position;
Fig. 5, similar to Fig. 4, shows the storage roll in the self-threading position;
Fig. 6, similar to Fig. 5, shows the carrier in the roll-loading position;
Fig. 7 shows the roll carrier in the manual threading position;
Fig. 8 is a partial perspective view of a second embodiment of the self-threading mechanism, showing the various components;
Fig. 9 is a partial front plan view of the second embodiment;
Fig. 10 is a partial depiction of the right end view of the second embodiment of the self-threading mechanism, spreader rolls and duckbill (showing two full rolls); and
Fig. 11 is a right end view, similar to Fig. 10, showing the empty lower roll and the full upper roll after threading.

### Description of the preferred embodiments

Many of the fastening, connection, processes and other means and components utilized in this invention are widely known and used in the field of the invention described, and their exact nature or type is not necessary for an understanding and use of the invention by a person skilled in the art, and they will not therefore be discussed in significant detail. Also, any reference herein to the terms "left" or "right" are used as a matter of mere convenience, and are determined by standing at the rear of the machine facing in its normal direction of travel. Furthermore, the various components shown or described herein for any specific application of this invention can be varied or altered as anticipated by this invention and the practice of a specific application of any element may already by widely known or used in the art by persons skilled in the art and each will likewise not therefore be discussed in significant detail.

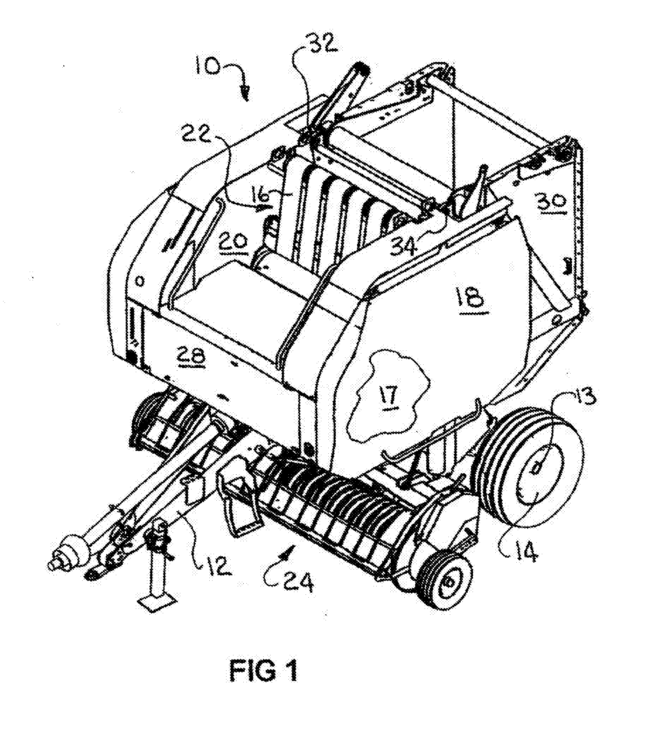

Referring to Fig. 1, a generally well-known round baler 10, with which the bale wrapper of the present invention can be used, is shown to comprise a main frame terminating forwardly in a tongue 12 and rearwardly slightly beyond a transverse axle 13 to which a pair of wheels 14 (only one shown) are mounted-thus forming a wheel supported main frame (not shown in detail). The main frame supports a series of belts 16 and floor rolls (not shown) which together with a first sidewall 17 (shown in the breakout) behind and generally parallel to cover panel 18 and a second sidewall 20, all together establishing a bale-forming chamber 22. Cut crop material is picked up by transverse pickup 24 and fed into bale-forming chamber 22 where it is, as discussed above, formed into a cylindrically shaped bale. It is then wrapped with twine or a wrapping material dispensed from a wrapping mechanism generally behind shield 28. Upon completion of the wrapping process, the tailgate 30 pivots upwardly about pivot points 32, 34, and the bale is ejected onto the ground. Exemplary prior art wrapping mechanisms are shown in U.S. Patent Numbers 4,366,665; 4,790,125; and 4,956,968.

The wrapping material can, as previously mentioned, be either net wrap or a generally solid film, though, because net wrap is the preferred material, further description will refer primarily to net wrap or net roll. This mechanism does not handle twine.

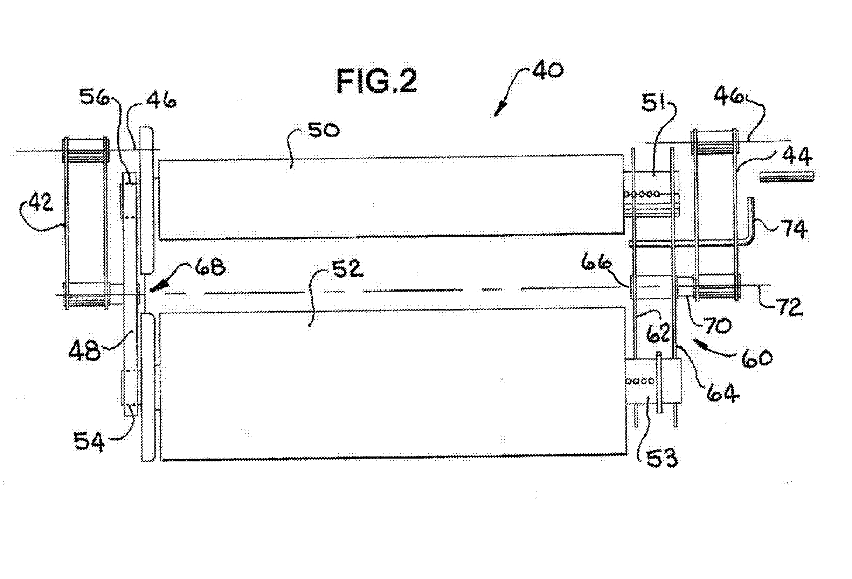

Fig. 2 is a front view of the general roll supporting structure of the first embodiment of the self-threading mechanism. A two-roll carrier 40 is hung on two pivot links 42, 44 attached with pivot pins for movement about a pivotal axis 46 to baler frame components, such as sidewalls 17 and 20. Carrier 40 is comprised of an elongate right end plate 48 slightly longer than the distance between the longitudinal axis of the two net rolls 50 and 52, and having holes therethrough 54, 56. A left end plate or roll-holding attachment 60 comprises a pair of plates 62, 64 held in spaced-apart relationship by hollow tubular section 66. Toward the outer ends of plates 62, 64 there are located holes, similar to those through right end plate 48. Carrier 40 further includes two shafts 51, 53 onto which the two net rolls 50, 52 slide for positional support. Holes 54, 56 are large enough relative to shafts 51, 53 to allow relative rotation of the shafts within the holes. Shafts 51, 53 could be removably mounted in several different ways, the figures depicting shafts that are inserted through holes, with means to maintain them in position-such as holes and cotter pins. Additionally, the right end plate is rotatably pinned to the pivot link 42 by removable pin 68, and the left end plate is rotatably affixed to pivot link 44 by removable pin 70 for rotation about axis 72. Thus, the two net rolls are supported between the right and left end plates and may selectively, as to be discussed further below, pivot about axis 72 and axis 46. A lock pin 74 extends through openings in both the pivot link 44 and left end support plate 60. When in the position shown in Fig. 2, lock pin 74 prevents rotation of the rolls about axis 72 during operation. As one of skill in the art would readily appreciate, the mechanism may include adjustment features that accommodate net rolls of different diameters.

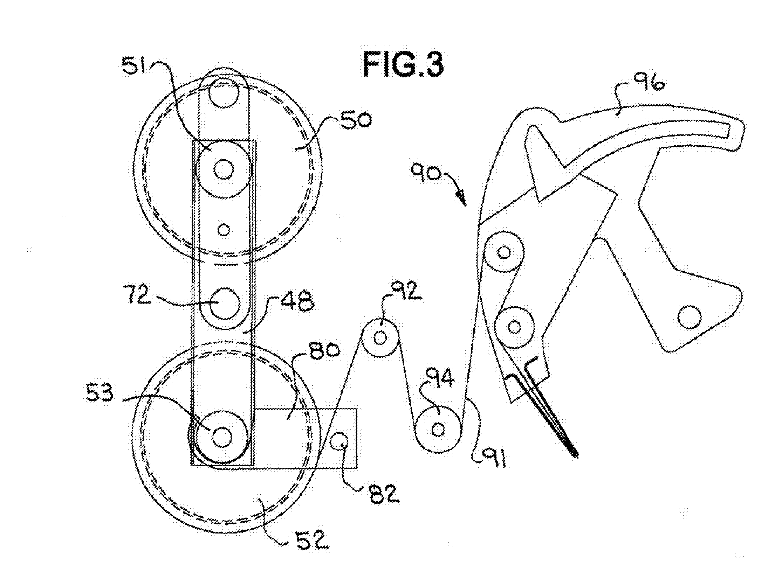

In normal operation, Fig. 3, the lower roll 52 on the carrier is the active roll, feeding net into the baler, while the upper roll 50 is in the storage position. Hook-shaped latch 80 pivots about point 82 to engage or disengage from the end of the active roll. When engaged, latch 80 secures the net carrier to the frame of the baler. Fig. 3 further depicts a current structure 90 for feeding net wrap 91 onto a bale. The net feeds off the roll 52, is threaded over spreader rolls 92, 94 and into billhook assembly 96. From the billhook, the net is fed onto the rotating bale for complete wrapping.

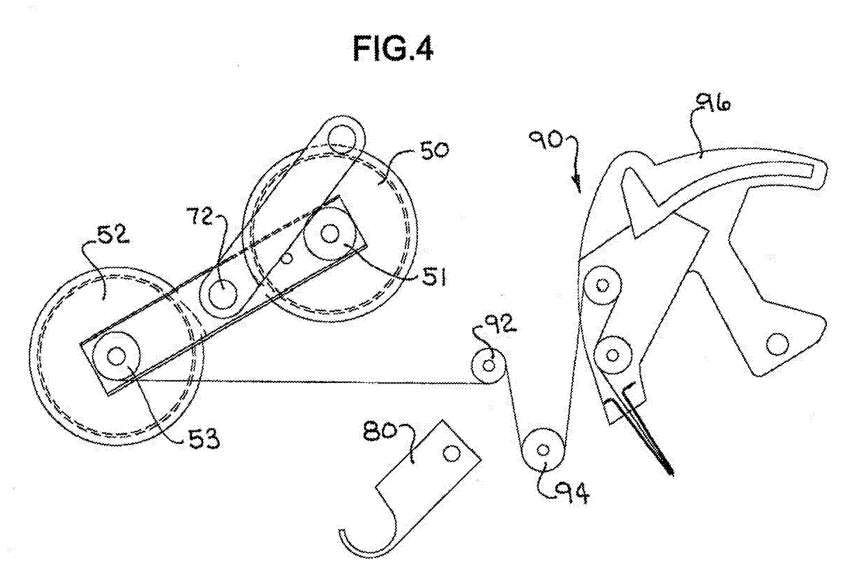

When using the self-threading feature of this new design, the active roll 52 is rotated to the top position and the stored roll 50 drops to the lower position. This is accomplished by first releasing lock pin 74 and latch 80, allowing the pivot links 42, 44 to swing forward and the net carrier to pivot about axis 72 as shown in Fig. 4. Since the pivot links 42, 44 swing forward, the top roll essentially drops straight down. This motion is required to eliminate any interference with the spreader rolls 92, 94.

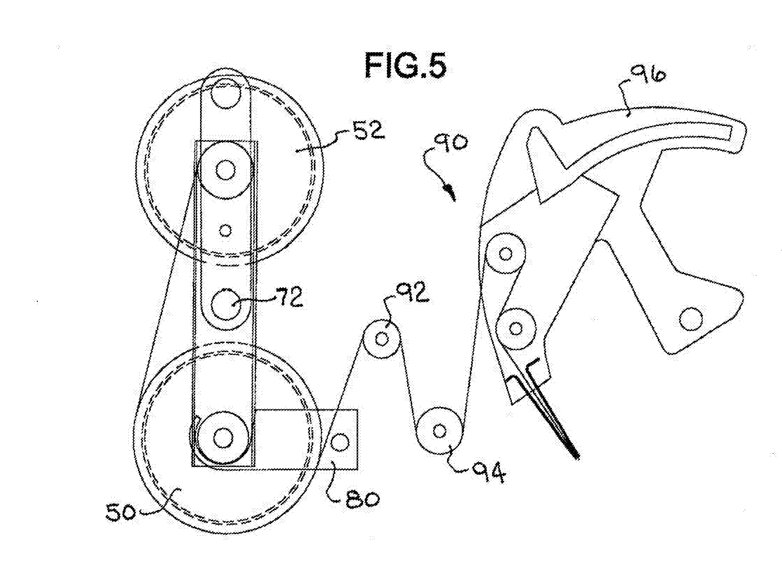

When the rolls are in the self-threading position, the net from the roll 52, which is reaching the point of exhaustion as seen in Fig. 5, wraps around the bottom of the roll 50. When wrapping the next bale, the net movement causes the roll 50 to start rotating. The end of the net on the lower roll 50 attaches itself to the upper roll net 52 and is carried through the duckbill assembly 90 and onto the bale. Ideally, when using the self-threading feature, the active roll 52 should be nearly empty (generally, enough wrap left to cover one bale) to avoid installing net from both rolls for multiple bales.

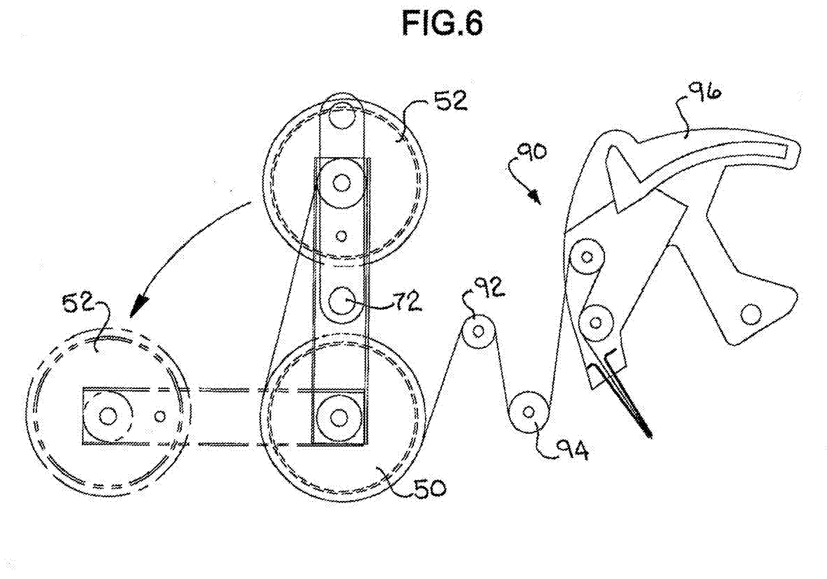

After completing the self-threading process, the upper roll 52 will be empty and again the lower roll 50 will become the active roll. In this situation, the operator will be able to replace the empty roll with a new roll of net. To do this, the operator needs to disengage the pins 68 and 70 connecting net roll carrier 40 to pivot pins 42, 44. When this is done, carrier 40 will pivot forward about the lower net roll 50 longitudinal axis as in Fig. 6. This motion does not affect the lower active net roll. Once pivoted forward, a new net roll can be installed, and the carrier returned to normal operating condition.

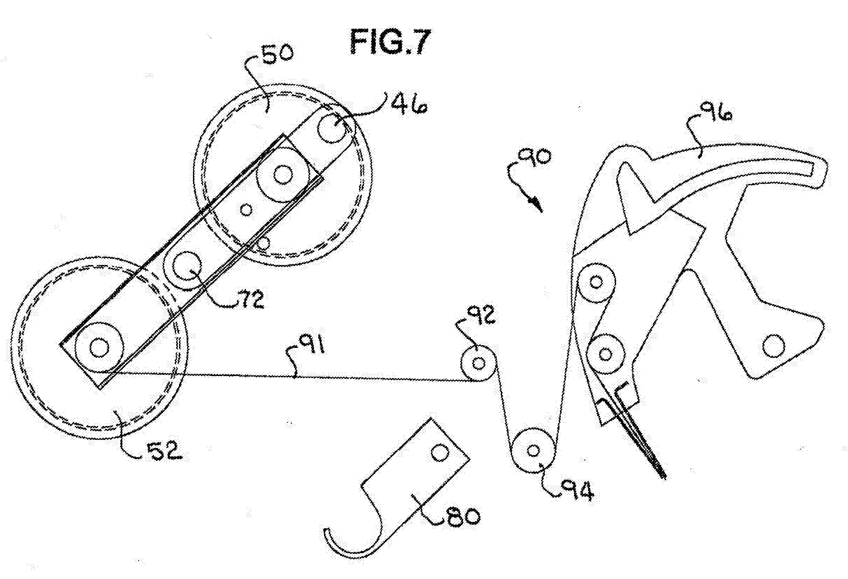

Another position of the carrier is the manual threading position shown in Fig. 7. This position would be used to allow access to the duckbill assembly, or to manually rethread the net due to a wrapper malfunction. To move to this position, the operator must release latch 80. This allows the net carrier 40 to pivot about pivotal axis 46. Pulling on the lower roll rotates the carrier 40 forward and upward, allowing access to the wrapping mechanism 90. In order to hold carrier 40 in this position, a support (not shown) could be engaged by the operator. When work on the wrapper is completed, the support can be removed and the carrier will return to the normal operating position.

Although left end plate 60 is shown as comprising two members 62, 64, it is clear that this member could be modified slightly to be a single plate, much like right end plate 48. Furthermore, for example, the preferred embodiment of the roll carrier supports two rolls, one active and one storage, however, it is possible to have three or more rolls arranged to move in a generally circular path. In such case, one would be active, with the remainder as storage. Obviously, the carrier would have to be modified to hold the additional rolls, as would the size of the holder.

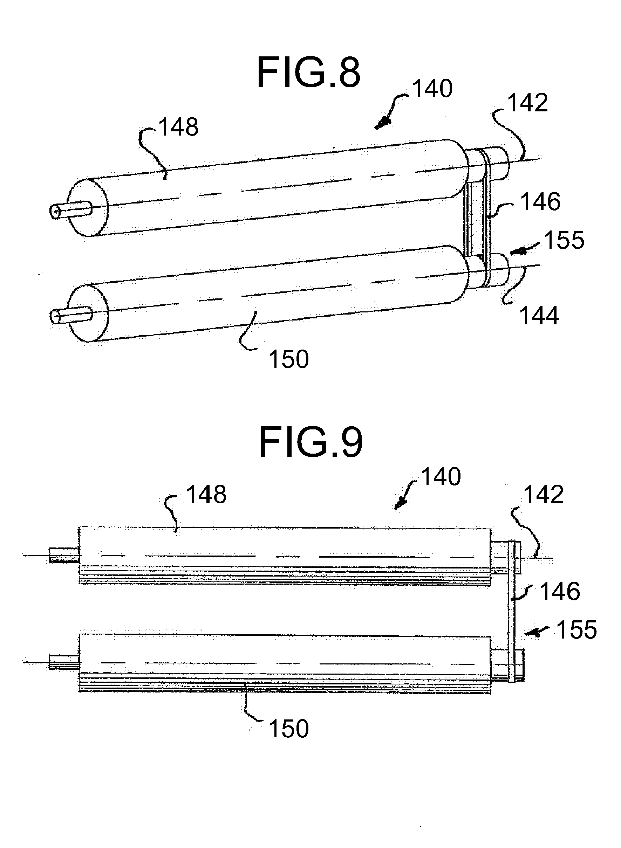

Fig. 8 is a partial perspective view of the general roll supporting structure of the second embodiment of the self-threading mechanism. An active roll 150 is rotatably and removably attached at its ends, along longitudinal axis 144 to sidewalls 17 and 20. A storage roll 148 is rotatably and removably attached at its ends, along longitudinal axis 142, and positioned generally above active roll 150; however, with additional guides or pinch rollers the storage roll 148 could be in substantially any position relative to the active roll that does not interfere with feeding of the wrapping material. Belt 146 is wrapped around the two net rolls 148, 150, with an electric, or mechanical, clutch 155 on the axis of roll 150.

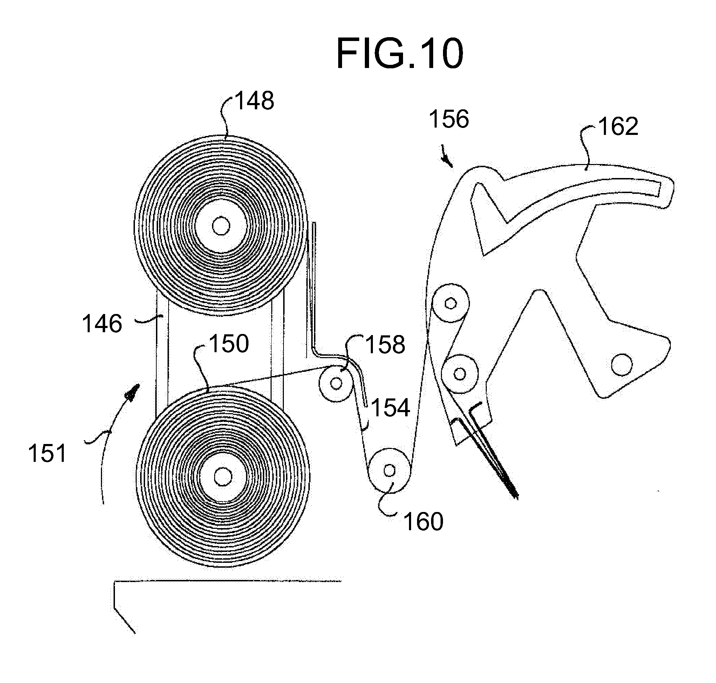

Fig. 9 is a partial depiction of the right end view of the wrapper mechanism, net rolls and duckbill with both net rolls 148, 150 with full supplies of wrapping material. Fig. 10 further depicts a currently used mechanism 156 for feeding net wrap 154 onto a bale. The net feeds off the roll 150 in the direction of arrow 150 and is threaded over spreader rolls 158, 160 and into duckbill assembly 162. From the duckbill, the net is fed onto the rotating bale for complete wrapping.

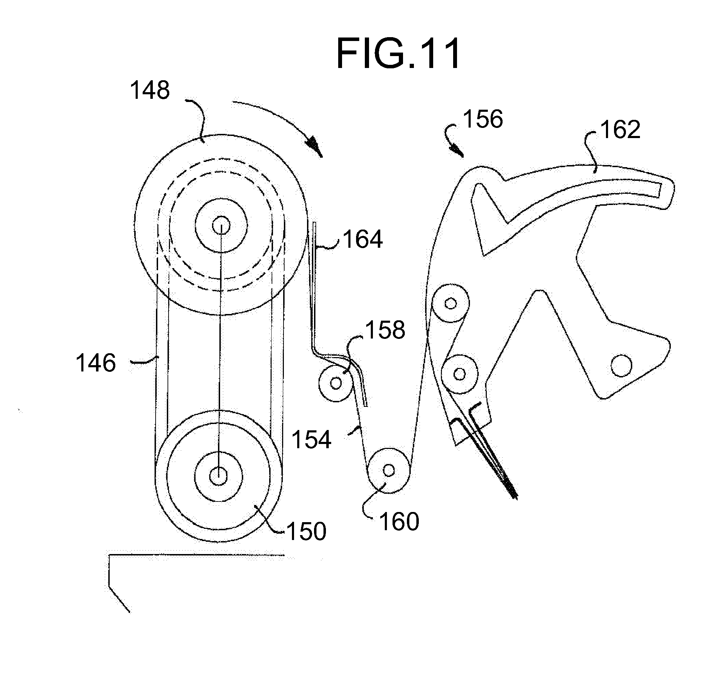

When using the self-threading feature of this embodiment, the active roll and the stored roll remain in the same position. As can be seen in Fig. 11, active roll 150 has completely emptied and the upper roll 148 has become active. The upper roll 148 is powered by electric clutch 155. When the lower roll 150 begins to reach the exhaustion point, a low net indicator, or observation of the operator, indicates that the lower roll 150 is almost empty and the electric clutch 155 is activated to allow the belt drive 146, connected between the lower roll 150 and the upper roll 148, to rotate the upper roll 148. Net is thus fed off the roll 148, guided by shield 164, into contact with the wrapping material being fed from the active roll 150 of net, pulling it along the same path, allowing the upper roll 148 of net to go through the wrapping mechanism and onto the bale. Moments later, the lower roll 150 of net is used up. The upper roll 148 of net would continue to be used until the operator installs another roll of net in the lower net box.

During the wrapping of the bale with two ends of wrapping material, one coming from the almost empty active roll and the other from the full storage roll, it is important that the duration of the wrapping cycle is increased. When the low net indicator indicates that the lower roll is almost empty and the self-threading cycle is started, the duration of the wrapping cycle is automatically increased to ensure a good and reliable overlap between the two net wraps.

## Claims

1. An agricultural round baler (10) comprising a bale-forming chamber (22) for forming a round bale of crop material and a wrapping mechanism for wrapping the formed bale with a wrapping material within the bale forming chamber (22) prior to ejection of the formed bale from the bale forming chamber (22), **characterised in that** the round baler (10) further comprises a self-threading mechanism (40,140) for automatically replacing an active roll (52, 150) of wrapping material with a storage roll (50, 148) prior to the active roll (52,150) reaching the point of exhaustion of wrapping material.

2. An agricultural round baler as claimed in claim 1, wherein the self-threading mechanism (40,140) operates to bring the free end of wrapping material of the storage roll (50,148) into contact with the wrapping material of the active roll (52,150).

3. An agricultural round baler as claimed in claim 1 or 2, wherein the duration of the wrapping cycle for wrapping the formed bale is increased upon activation of the self-threading mechanism (40,140) to provide for an optimal wrapping of the formed bale.

4. An agricultural round baler (10) as claimed in any of the preceding claims, wherein the self-threading mechanism comprises:
- a roll carrier (40) for receiving and rotatably holding at least the elongated active roll of wrapping material (50) and the elongated storage roll of wrapping material (52);
- a first (42) and a second (44) pivot link for supporting the roll carrier (40), and
- securing means (68,70,74) for securing the roll carrier (40) relative to the first (42) and second (44) pivot link.

5. An agricultural round baler (10) as claimed in claim 4, wherein the roll carrier (40) comprises:
- at least two shafts (51,53) for holding the at least two rolls (50,52) of wrapping material;
- a first connecting means (48) for pivotably connecting the at least two shafts (51,53) to the first pivot link (42) and
- a second connecting means (60) for pivotably connecting the at least two shafts (51,53) to the second pivot link (44).

6. An agricultural round baler (10) as claimed in claim 5, wherein the first connecting means is an end plate (48) and the second connecting means is a roll holding attachment (60) comprising two plates (62,64), the end plate (48) and the two plates (62,64) of the holding attachment comprises at least two holes (54, 56) for receiving the shafts (51,53) of the at least two rolls (50,52)

7. An agricultural round baler (10) as claimed in any of claims 4 to 6, wherein the first (42) and second (44) pivot link each have respective first and/or second spaced apart pivot points, the respective first pivot points pivotably affixed to the baler (10) on a common first horizontal axis (42), and/or the respective second pivot points pivotably affixed to the respective end plates on a common second horizontal axis (72).

8. An agricultural round baler (10) as claimed in claim 7, wherein the securing means comprises a first locking mechanism (74) for selectively locking the roll carrier (40) in a position relative to the first (42) and second (44) pivot links about the second horizontal axis (72).

9. An agricultural round baler (10) as claimed in claim 8, wherein the securing means further comprises a second locking mechanism (68,70) pivotably affixed to the baler (10) for selective movement between a first position locking the roll carrier (40) and preventing rotation thereof around the second horizontal axis (72) and a second position allowing such rotation, whereby when in operation, the first locking mechanism (74) may be unlocked and the second locking mechanism (68,70) is in the second position, the storage roll (52) rotates forwardly about the first horizontal axis (46) and downwardly about the second horizontal axis (72) to bring the wrapping material on the storage roll (52) to come into contact, and adhere to the wrapping material being fed from the active roll (50) onto a bale in the bale-forming chamber such that when the active roll (50) is exhausted of wrapping material the wrapping material on the storage roll (52) is fed into the wrapping mechanism.

10. An agricultural round baler (10) as claimed in any of the claims 4 to 9, wherein the roll carrier (40) is selectively movable between a first position where the active roll (50) feeds wrapping material into the wrapping mechanism along a predetermined path and a second position where the wrapping material on the storage roll (52) moves into contact with the wrapping material from the active roll (50) along the predetermined path when the active roll (50) is near exhausted of wrapping material, whereby the wrapping material on the storage roll (52) is pulled through the wrapping mechanism by the wrapping material on the active roll (50).

11. An agricultural round baler (10) as claimed in any of the claims 1 to 3, wherein the self-treading mechanism comprises
- a roll support (140) affixed to the baler (10), the roll support (140) including a first and second shafts extend axially through the active (150) and storage (148) rolls, the storage roll (148) being supported generally adjacent the active roll (150) and the active roll (150) feeding wrapping material along a predetermined path to the wrapping mechanism; and
- a driving mechanism (155, 146) for selectively driving the storage roll (148) to rotate and feed wrapping material thereon downwardly into contact with the wrapping material of the active roll (150) moving along the predetermined path.

12. An agricultural round baler (10) as claimed in claim 11, wherein the self-threading mechanism further comprises a guide (164) for directing the wrapping material from the storage roll (148) into the predetermined path and into contact with the wrapping material being fed from the active roll (150).

13. An agricultural round baler (10) as claimed in claim 12, wherein the guide is a shield-like member extending generally parallel to the length of the elongate storage (148) and active (150) rolls, between the sides of the baler (10).

14. An agricultural round baler (10) as claimed in any of the claims 11 to 13, wherein the storage roll (148) is generally above and parallel to the active roll (150) and is selectively driven through a clutch mechanism (155) and by a belt drive system (146).

15. An agricultural round baler (10) as claimed in any of the preceding claims, wherein the wrapping material is netwrap or film.

16. A method of self-threading a sheet-like bale wrapping material from a roll through a bale wrapping mechanism, comprising the steps of:
- providing an active roll (52,150) of bale wrapping material in a first location and feeding it along a predetermined path through the bale wrapping mechanism;
- providing a storage roll (50,148) of bale wrapping material in a second location generally above and parallel to the active roll (52,150);
- observing the active roll (52,150) to determine when it is nearly exhausted of wrapping material, and, when that condition is observed:
- bringing the free end of wrapping material of the storage roll (50,148) into contact with the wrapping material of the active roll (52,150) so that the wrapping material on the storage roll (50,148) adheres to and follows the wrapping material from the active roll (52,150) being fed along the predetermined path.

17. The method as claimed in claim 16, wherein the contacting step further comprises the steps of
- moving the storage roll (50) from the second location to the first location into contact with the bale wrapping material along the predetermined path so that the wrapping material on the storage roll (50) adheres to and follows the wrapping material from the active roll (52) being fed along the predetermined path; and
- moving the active roll (52) in co-ordination with the movement of the storage roll (50) from the first location to the second location.

18. The method as claimed in claim 17, further includes the step of locking the storage (50) and active (52) rolls in relative position, such that the storage roll (50) becomes the active roll as the active roll (52) is exhausted of wrapping material.

19. The method as claimed in claim 18, further including the step of replacing what was initially the active roll (50) with a new roll of bale wrapping material.

20. The method as claimed in claim 16, wherein the contacting step further comprises the steps of rotating the storage roll (148) to feed wrapping material into contact with the wrapping material from the active roll (150) in the predetermined path, whereby the wrapping material on the storage roll (148) is pulled through the wrapping mechanism by the wrapping material (154) on the active roll (150).

21. The method as claimed in claim 20, further including the step of providing a guide (164) for directing the wrapping material from the storage roll (148) into the predetermined path and into contact with the wrapping material (154) being fed from the active roll (150).
